# EUROPÄISCHE PATENTSCHRIFT

(11) **EP 1 844 981 B1**
(45) Veröffentlichungstag und Bekanntmachung des Hinweises auf die Patenterteilung: **21.09.2011**
(21) Anmeldenummer: 06007788.0
(22) Anmeldetag: 13.04.2006
(51) Int. Cl.: B60P 1/44, B62D 25/20

(54) **Plattform für Hubladebühnen für Kraftfahrzeuge**
Platform for tailgate lifts for vehicles
Plate-forme pour hayons pour véhicules

(43) Veröffentlichungstag der Anmeldung: 17.10.2007
(73) Patentinhaber: Bär, Gerd, 74078 Heilbronn (DE)
(72) Erfinder: Bär, Gerd, 74078 Heilbronn (DE)
(74) Vertreter: Dreiss

(56) Entgegenhaltungen:
- DE-U1- 8 910 845
- DE-U1- 29 706 089
- DE-U1- 29 923 243
- FR-A- 2 575 709

## Beschreibung

Die Erfindung betrifft eine Plattform für Hubladebühnen für Kraftfahrzeuge, mit den Merkmalen des Oberbegriffs des Anspruchs 1.

Eine derartige Plattform ist bekannt aus DE 297 06 089 U1, die offenbart und lehrt, zur besseren Rutschverhinderung die Oberfläche der Plattform mit einer Vielzahl von unregelmäßigen Unterbrechungen auszubilden, die durch Strahlen hergestellt werden können. Ferner ist die Rede von Unterbrechungen aus linienförmigen Vertiefungen, die mit der Längsprofilierung einen Winkel von mindestens 30° bilden, wobei aber keine konkreten weiteren Hinweise zur Ausbildung und Anordnung gegeben sind.

Die Benutzung von Hubladebühnen erfolgt naturgemäß meistens unter freiem Himmel, so dass die Plattformen und insbesondere die begehbare Seite der Plattform der Bewitterung durch Regen und Schnee ausgesetzt ist. Außerdem kommt Schmutz durch auf die Plattform bewegte Güter, Rollbehälter, Gabelhubwagen oder durch die Füße des Bedieners. Insbesondere bei Nässe ergibt sich eine gefährliche Situation, da die begehbare Oberfläche hierdurch glitschig wird. Hinzu kommt, dass die Plattform zwar im angehobenen Zustand eine überwiegend waagrechte Position einnimmt, im abgeneigten Zustand am Boden jedoch eine beträchtliche Schräge von insbesondere 6 bis 8° zur Waagrechten oder Horizontalen einnehmen kann. Aber auch beim Lade- oder Entladebetrieb im angehobenen Zustand kann es durch Gewichtsverlagerung und Einfedern bzw. Ausfedern der Achsen zu einer Neigung der Plattform kommen. Es besteht dann erhöhte Rutschgefahr. Kommt es hier zu einem Unfall, kann dies aufgrund der Fallhöhe erhebliche Folgen für den Benutzer haben. Die Erfahrung zeigt, dass die Gefahr, dass Güter oder Personen auf der Plattform durch Ausrutschen verunfallen, am Boden infolge der stärkeren Neigung der Plattformoberfläche im abgeneigten Zustand noch größer ist. Die Verletzungsfolgen sind am Boden jedoch glücklicherweise geringer.

Es wurde bereits versucht, diesem Problem zu begegnen. Generell existieren Plattformen aus Stahl und solche aus Aluminium. Bei ersteren ist es möglich, die begehbare Oberfläche in Form eines sogenannten Tränenblechs auszubilden, wobei die verwandte Oberflächenkonturierung in jeder Richtung einen guten Grip ergibt, also eine Haft- oder Rutschfestigkeit im Zusammenwirken mit den Schuhen eines Benutzers oder mit Rollen von üblicherweise zum Beladen und Entladen verwandten Hilfsmitteln, wie Rollbehältern, Gabelhubwagen oder dergleichen. Bei Plattformen aus Aluminium wurde in der Vergangenheit zwar schon eine entsprechende Oberflächenkonturierung verwandt; da dies jedoch extrem aufwendig war, werden solche Plattformen heute aber so gut wie nicht mehr benutzt. Stattdessen werden Aluminium-Plattformen aus Strangpressprofilen, sogenannten Hohlfachprofilleisten, hergestellt. Im Zuge des Strangpressens können diese Profile auf der späteren begehbaren Seite der Plattform mit in Pressrichtung erstreckten Riffeln ausgebildet werden. Hierunter werden linear erstreckte steg- oder rippenförmige Vorsprünge zur begehbaren Seite hin verstanden, die zweckmäßigerweise beim Strangpressen der Profile ausgebildet werden.

Plattformen aus Strangpressprofilen haben den grundsätzlichen Nachteil, dass sie zwar quer zur Riffelung einen guten Grip abgeben, in Richtung der Riffelung aber nahezu keine Rutschfestigkeit bereitzustellen vermögen. Diesem Problem wurde bisweilen auf Kundenwunsch und - anforderung dadurch begegnet, dass auf die begehbare Oberfläche der Plattformen Kunststoffbeläge, insbesondere in Aufspritzverfahren, aufgebracht wurden. Es wurde beispielsweise mit Kunststoffbelägen auf Polyurethan-Basis mit eingelagerten Quarzkörnern gearbeitet. Ein solcher Belag hat zwar den Zusatznutzen, dass er im Hinblick auf ein Überfahrgeräusch, welches Räder von Rollwagen oder Gabelhubwagen erzeugen, schalldämmend wirkt; er ist aber sehr teuer, so dass im Ergebnis weniger als 10% der Plattformen damit ausgestattet werden.

Es wurde auch bereits der Vorschlag gemacht, diese in Pressrichtung und parallel zueinander verlaufenden Riffeln mit freigefrästen Aussparungen zu versehen, die dann in Querrichtung der Riffeln nebeneinander liegen, also infolge des Fräsvorgangs (Querfräsung) senkrecht zur Längsrichtung der Riffeln betrachtet exakt nebeneinander fluchten. Sie haben und in Längsrichtung der Riffeln einigen Abstand zueinander.

Besonders rutschempfindlich sind naturgemäß Plattformen mit im geschlossenen Zustand der Hubladebühne vertikal verlegten Profilen ohne weitergehende rutschverhindernde Mittel. Solche Plattformen haben nahezu keinen Grip, wenn der Benutzer auf die am Boden liegende Plattform auftritt. Es besteht also bereits ein Unfallrisiko im ganz normalen Einsatzfall für eine Bedienperson, insbesondere wenn diese ungeeignetes Schuhwerk trägt. Wie bereits erwähnt, wurde zur Verbesserung dieser Situation die Querfräsung geschaffen, wobei die Riffeln der Plattform mit 8 bis 12 mm breiten Ausfräsungen versehen werden, so dass ein guter Grip oder Trittgrip resultiert. Diese Art von Grip ist dauerhafter als ein Kunststoffbelag und in der Herstellung außerdem preisgünstiger.

Wenn bei einem Anwendungsfall mit naturgemäß schwereren Elektrogabelhubwagen die Plattform längs zur Riffelung angefahren werden muss, so ist dies bei Plattformen ohne Querfräsung entweder überhaupt nicht möglich, oder es muss schräg zur Längsrichtung der Riffeln angefahren werden. Bei Plattformen mit Querfräsungen besteht aber immer noch das Problem, dass in Längsrichtung zwischen den Querfräsungen ausladende Bereiche ohne Ausfräsungen und damit ohne Grip vorhanden sind, bei denen sich wiederum dasselbe Problem stellt. Als besonders problematisch erweist sich dies bei einer Verwendung unter Benutzung von Elektrogabelhubwagen, die üblicherweise nur ein einziges angetriebenes Rad aufweisen.

Der vorliegenden Erfindung liegt die Aufgabe zugrunde, den vorstehend geschilderten Problemen bei Plattformen aus Aluminium-Strangpressprofilen wirksam zu begegnen und den Einsatz von Hubladebühnen sicherer zu machen.

Diese Aufgabe wird erfindungsgemäß durch eine Plattform mit den Merkmalen des Anspruchs 1 gelöst. Es soll also quer zur Längsrichtung der Riffeln kein oder nur ein teilweiser Überlapp der Aussparungen gegeben sein. Auf diese Weise kann die begehbare Seite der Plattform gewissermaßen flächendeckend mit Aussparungen ausgebildet werden. Es wird so ein wirksamer Grip, Traktionsgrip oder Trittgrip geschaffen, der die bislang bekannten Lösungen deutlich übertrifft, da er gewissermaßen über die gesamte Plattform und in jeder Richtung wirksam ist. Dadurch, dass die Aussparungen der Riffeln in Längsrichtung zueinander versetzt angeordnet sind, also in Querrichtung betrachtet nicht oder nur teilweise überlappen bei benachbarten Riffeln, kann auch das vorausgehend geschilderte Problem überwunden werden, wonach ein Antriebsrad eines Be- oder Entlademittels, insbesondere eines Elektrogabelhubwagens, in Bereiche ohne Aussparung gelangt und dort durchdreht. Dadurch, dass das Durchdrehen weitgehend verhindert werden kann, ergibt sich auch eine sehr viel geringere Abnutzung der Antriebsräder von Ladehilfsmitteln, die zuvor aufgrund der scharfen Kanten rasch so stark angegriffen oder zerstört wurden, dass sie häufig ausgewechselt werden mussten.

Die erfindungsgemäße Lösung ist auch den eingangs erwähnten Kunststoffbelägen mit eingebetteten Quarzkörnern überlegen, da letztere nur anfänglich einen guten Grip in jeder Richtung erfüllten. Bei intensiver Benutzung werden nämlich die Quarzkörper aus der Kunststoffstruktur herausgerissen. Es ergibt sich im Laufe des Betriebs, insbesondere bei Nässe und/oder bei zusätzlicher Einwirkung von Schmiere (z. B. verschüttete Milch, Butter) eine Oberflächensituation, die rutschiger ist als eine Plattform, bei der überhaupt kein Kunststoffbelag vorhanden ist.

In vorteilhafter Weise kann mit der erfindungsgemäßen Lösung erreicht werden, dass bei jeder Stellung eines Antriebsrads eines Ladehilfsmittels mehrere Kanten, welche die Aussparungen begrenzen oder von den in Längsrichtung erstreckten Riffeln gebildet sind, im Bereich der Kontaktfläche des Antriebsrads zur Plattform (häufig als Latschfläche bezeichnet) im Eingriff sind. Zusätzlich wird damit erreicht, dass die Flächenpressung des Antriebsrads auf oder gegen einen nicht abgefrästen Abschnitt der Riffeln dadurch erhöht wird, dass infolge einer größeren Anzahl von Riffeln die Kontaktfläche zu der betrachteten Riffel abnimmt. Das Rad wird an diesen Stellen mehr verformt und bei der Ausfräsung der benachbarten Riffel eher angepresst.

Insgesamt wird die Betriebssicherheit bei der Verladearbeit insbesondere unter Zuhilfenahme von Ladehilfsmitteln, wie z. B. Elektrogabelhubwagen, beträchtlich erhöht. Es lässt sich ein besserer und in jeder Richtung wirksamer Grip als bei bekannten Ausführungsformen erreichen. Ein Entgleiten des Antriebsrads üblicher Ladehilfsmittel auf der Plattformoberfläche kann nunmehr ausgeschlossen werden. Hierdurch erhöht sich auch die Standzeit der Antriebsräder. Für die Bedienpersonen ergibt sich eine bisher unerreichte Trittsicherheit, und zwar auch bei ungeeignetem Schuhwerk.

Es wurde außerdem festgestellt, dass Überfahrgeräusche oder Überrollgeräusche von erfindungsgemäß ausgebildeten Plattformen mit Längsrichtung des Kraftfahrzeugs erstreckten Riffeln und anspruchsgemäßen Aussparungen geringer sind als bei Plattformen mit quer erstreckten Riffeln.

Nach einer Ausführungsform der erfindungsgemäßen Plattform liegen die Aussparungen der jeweils übernächsten Riffeln auf im Wesentlichen gleicher Höhe in Längsrichtung der Riffeln. Anders ausgedrückt liegen die Aussparungen der jeweils übernächsten Riffeln in Ebenenrichtung der Plattform und senkrecht zur Längsrichtung der Riffeln betrachtet im Wesentlichen deckungsgleich hintereinander, während keine oder nur eine teilweise Überlappung von Aussparungen unmittelbar benachbarter Riffeln gegeben ist.

Es erweist sich als vorteilhaft, wenn die Aussparungen so angeordnet bzw. über die begehbare Fläche der Plattform verteilt sind, dass ein gedachter Flächenbereich von ca. 80 mm x 30 mm, bei gedachter Verschiebung über die Plattform in Längsrichtung der Riffeln stets mehrere Aussparungen überfängt. Ein solcher Flächenbereich mag die Latschfläche eines Antriebsrads bei üblichen maschinellen Ladehilfsmitteln wiedergeben. Bei entsprechender Ausbildung ist dann sichergestellt, dass ein guter Grip zur Verfügung steht.

Nach einer weiteren vorteilhaften Ausführungsform sind die Aussparungen so angeordnet, dass in Ebenenrichtung der Plattform und senkrecht zur Längsrichtung der Riffeln betrachtet keine Gerade denkbar ist, die nicht durch Aussparungen verläuft oder diese tangiert. Auf diese Weise lässt sich ein im Wesentlichen in allen Richtungen gleichmäßig wirksamer Grip erreichen.

Nach einer weiteren Ausführungsform von besonderer Bedeutung sind die Aussparungen in Aufsicht auf die Plattform betrachtet nach einem zick-zack-förmigen oder wellenförmigen Muster angeordnet. Die Aussparungen liegen also auf Zick-Zack-Linien oder Wellenlinien oder beschreiben solche Zick-Zack-Linien oder Wellenlinien, die zueinander im Wesentlichen parallel oder äquidistant verlaufen können, was zwar herstellungstechnisch vorteilhaft, jedoch nicht zwingend erforderlich ist.

Die Aussparungen müssen nicht zwingend eine konkrete Form aufweisen; es kann sich als vorteilhaft erweisen, wenn die Aussparungen in Ebenenrichtung der Plattform und senkrecht zur Längsrichtung der Riffeln betrachtet eine Bogenform, insbesondere eine Kreissegmentform, aufweisen. Auch eine Rechteck- oder Trapezform ist denkbar.

Die Aussparungen können in an sich beliebiger Weise hergestellt werden, wobei es sich als herstellungstechnisch vorteilhaft und wirtschaftlich erweist, wenn die Aussparungen Ausfräsungen sind.

Nach einer bevorzugten Verfahrensvariante werden die Aussparungen unter Verwendung von vorzugsweise zwei Walzenfräsern hergestellt, die in einer jeweiligen diskreten Fräsposition in Richtung senkrecht auf die Plattformebene in die Riffeln eintauchen. Der Walzenfräser ist dabei so ausgebildet, dass er in einer jeweiligen Arbeitsposition die benachbarten Riffeln einer spanend zu bearbeitenden Riffel nicht berührt. Ein vorzugsweise simultan eingesetzter weiterer Walzenfräser kann entsprechend ausgebildet sein und ist dem erstgenannten vorgeordnet oder nachgeordnet und beispielsweise um eine Riffel versetzt zu ersterem positioniert.

Bei einer zweckmäßigen Ausführungsform der erfindungsgemäßen Plattform ist der Abstand der Riffeln voneinander quer zur Längsrichtung der Riffeln betrachtet 8 mm - 20 mm, insbesondere 8 - 15 mm und weiter insbesondere 10 - 15 mm.

Der Abstand benachbarter Aussparungen einer Riffel voneinander in Längsrichtung der Riffeln beträgt vorzugsweise 12 mm - 30 mm, insbesondere 12 - 25 mm und weiter insbesondere 12 - 20 mm.

Die Längserstreckung der Aussparungen beträgt zweckmäßigerweise in Längsrichtung der Riffeln 10 - 25 mm, insbesondere 10 - 20 mm und weiter insbesondere 10 - 18 mm.

Gegenstand der Erfindung ist auch eine Hubladebühne mit einer erfindungsgemäßen Plattform.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Plattform. In der Zeichnung zeigen:
- Figur 1: eine Draufsicht auf eine bekannte Plattform mit Aussparungen, die durch eine Querfräsung hergestellt sind;
- Figur 2: eine vergrößerte ausschnittsweise Darstellung einer Aussparung;
- Figur 3: eine Draufsicht auf eine Ausführungsform der erfindungsgemäßen Plattform;
- Figur 4: eine beispielhafte Darstellung einer Aussparung;
- Figur 5: eine Draufsicht auf eine weitere Ausführungsform der erfindungsgemäßen Plattform; und
- Figur 6: eine Ansicht des Strangpressprofils nach Figur 5.

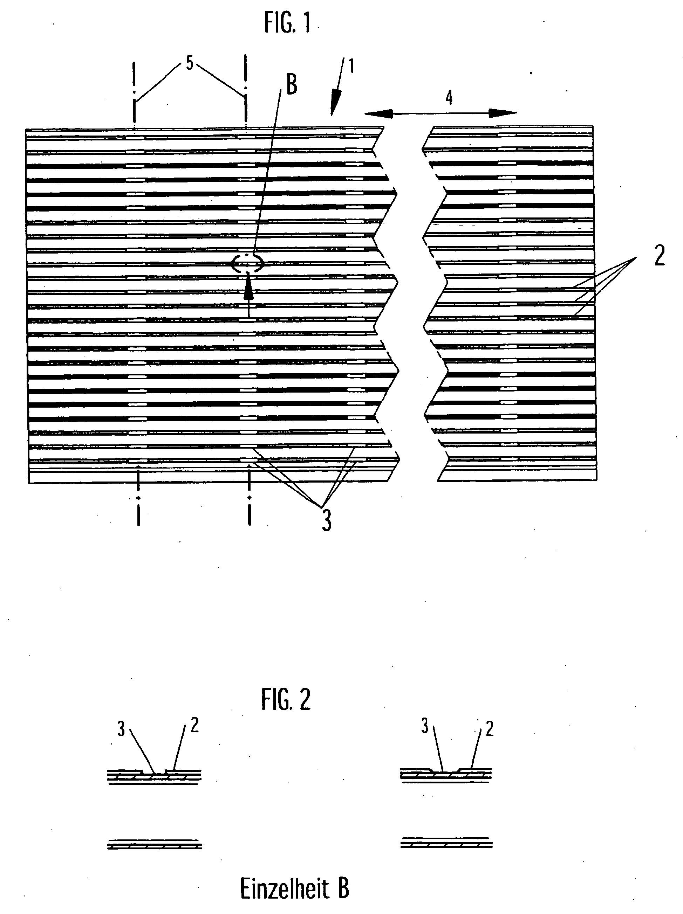

Figur 1 zeigt eine Draufsicht auf ein bekanntes Aluminium-Strangpressprofil 1, welches mit weiteren Strangpressprofilen zur Bildung einer Plattform für eine Hubladebühne koppelbar ist. Auf der die begehbare Plattformseite bildenden Seite der Strangpressprofile 1 ist eine Vielzahl von in Pressrichtung der Strangpressprofile erstreckten Riffeln 2 vorgesehen. Diese Riffeln sind mit zur begehbaren Seite offenen Aussparungen 3 versehen. Diese Aussparungen 3 sind durch einen senkrecht zur Längsrichtung 4 der Riffeln 2 ausgeführten Fräsvorgang unter Verwendung eines Stirnfräsers hergestellt. Die Ausfräsungen 3 verschiedener Riffeln 2 liegen in Ebenenrichtung der begehbaren Plattformseite und quer zur Längsrichtung 4 exakt einander 100% überdeckend hintereinander. Wie aus der Figur ersichtlich, werden verschiedene zueinander parallele Linien 5 von Aussparungen 3 gebildet, die in Längsrichtung 4 einen Abstand voneinander haben. Der Grip einer unter Verwendung dieser Aluminium-Strangpressprofile 1 hergestellten Plattform ist unzureichend.

Figur 2 zeigt eine Ansicht zweier Ausführungsformen einer Aussparung 3 bei einer Riffel 2 in Ebenenrichtung der begehbaren Plattformseite und senkrecht zur Längsrichtung 4 der Riffeln 2 betrachtet (Einzelheit B).

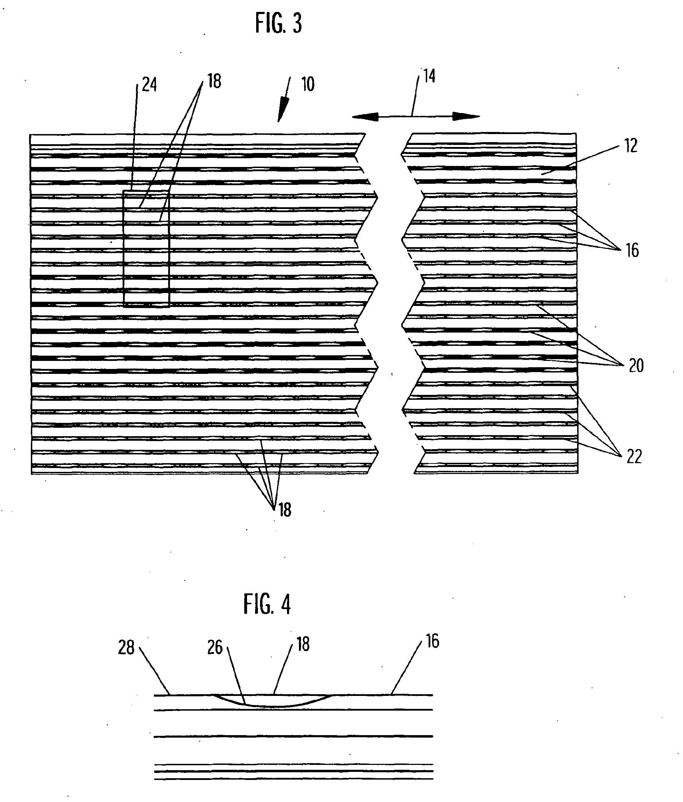

Figur 3 zeigt eine entsprechende Ansicht eines erfindungsgemäß bearbeiteten Strangpressprofils 10 bzw. eines Teils der hieraus gebildeten begehbaren Plattformseite 12 einer erfindungsgemäßen Plattform. Auf der begehbaren Plattformseite 12 sind eine Vielzahl von in Pressrichtung bzw. Längsrichtung 14 der Strangpressprofile 10 erstreckten Riffeln 16 vorgesehen. Die Riffeln 16 weisen eine Vielzahl von Aussparungen 18 auf. Erfindungsgemäß sind die Aussparungen 18 von unmittelbar zueinander benachbarten Riffeln 16 in Pressrichtung bzw. Längsrichtung 14 versetzt zueinander angeordnet. Im beispielhaft dargestellten Fall liegen die Aussparungen 20 der jeweils übernächsten Riffel 22 oder anders ausgedrückt der durch jeweils eine Riffel voneinander getrennten Riffeln 22 in Ebenenrichtung und senkrecht zur Längsrichtung 14 betrachtet exakt hintereinander. Die Aussparungen 18 von benachbarten Riffeln 16 überschneiden sich jedoch in der Längsrichtung 14 nicht. Sie sind im beispielhaft dargestellten Fall so angeordnet, dass sie gerade nicht überlappen. Ein teilweiser Überlapp wäre aber auch denkbar.

Mit einem Rechteck 24 sei beispielhaft die Latschfläche eines Antriebsrades eines Ladehilfsmittels, beispielsweise eines Elektrogabelhubwagens bezeichnet. Man erkennt ohne weiteres, dass die Latschfläche an jeder Position der begehbaren Plattformseite 12 mit mehreren Aussparungen 18 zusammenwirkt und so einen guten Grip auf der Plattformseite 12 erhält.

Figur 4 verdeutlicht eine von Figuren 1 und 2 abweichende Gestalt der Aussparungen 18. Sie sind nicht rechteck- oder trapezförmig, sondern in der dargestellten Querschnittsebene betrachtet, bogenförmig, insbesondere kreissegmentartig ausgebildet. Der Übergang des die Aussparung 18 begrenzenden Bogens 26 in die Oberseite 28 der Riffel 16 ist jedoch nicht verrundet, sondern unstetig, was wiederum einen guten Grip bildet.

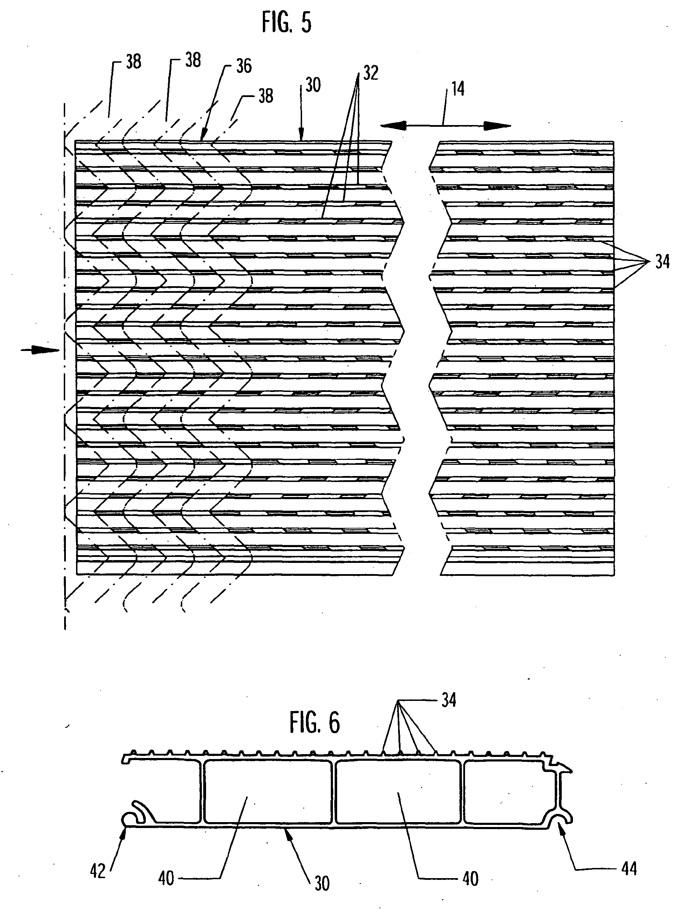

Figur 5 zeigt wiederum anhand einer Aufsicht auf ein Strangpressprofil 30 eine weitere erfindungsgemäße Anordnung von Aussparungen 32 bei den Riffeln 34. Die Aussparungen 32 sind in Aufsicht auf die begehbare Plattformseite betrachtet nach einem zick-zack-förmigen oder wellenförmigen Muster 36 angeordnet. Die Aussparungen 32 beschreiben also im Wesentlichen äquidistante Zick-Zack-Linien oder Wellenlinien 38.

Schließlich zeigt Figur 6 eine Ansicht des Strangpressprofils 30 von links (siehe Pfeil in Figur 5), und man erkennt mehrere Hohlfächer 40, die von in Längsrichtung 14 erstreckten Wandungen des Strangpressprofils 30 begrenzt werden. Man erkennt außerdem an den beiden Längsseiten 42, 44 eine komplementär zueinander ausgebildete und in der Längsrichtung erstreckte Formgebung. Durch diese Formgebung sind mehrere Strangpressprofile 30 formschlüssig miteinander verrastbar. Eine solche verrastete Anordnung aus mehreren Strangpressprofilen kann dann zur Bildung einer Plattform beispielsweise randseitig von weiteren Halteteilen rahmenförmig umgeben werden. Üblicherweise wird zum Anschlusskopf der Hubladebühne hin ein die Leisten oben und unten umfassendes Anschlussprofil verwendet, wobei die Strangpressprofile vorzugsweise in Längsrichtung des Kraftfahrzeugs, also im geschlossenen Zustand der Hubladebühne, vertikal ausgerichtet angeordnet sind.

## Patentansprüche

1. Plattform für Hubladebühnen für Kraftfahrzeuge, mit einer Mehrzahl von Aluminium-Strangpressprofilen (10, 30), wobei auf der begehbaren Plattformseite (12) eine Vielzahl von in Pressrichtung der Strängpressprofile (10, 30) erstreckten Riffeln (16, 22, 34) ausgebildet sind, die mit zur begehbaren Seite (12) offenen Aussparungen (18, 20, 32) versehen sind, wobei die Aussparungen (18, 20, 32) bei einer Riffel (16, 22, 34) nicht über ihre gesamte jeweilige Erstreckung direkt neben den Aussparungen (18, 20, 32) der benachbarten Riffeln (16, 22, 34) liegen, **dadurch gekennzeichnet, dass** die Aussparungen (18, 20, 32) benachbarter Riffeln (16, 22, 34) in Längsrichtung (14) der Riffeln (16, 22, 34) versetzt zueinander und in Aufsicht auf die Plattform betrachtet nach einem zickzack-förmigen oder wellenförmigen Muster (36) angeordnet sind.

2. Plattform nach Anspruch 1, **dadurch gekennzeichnet, dass** die Aussparungen (20) der jeweils übernächsten Riffeln (22) auf im wesentlichen gleicher Höhe in Längsrichtung (14) der Riffeln liegen.

3. Plattform nach Anspruch 1 oder 2, **dadurch gekennzeichnet, dass** die Aussparungen (18, 20, 32) so angeordnet sind, dass ein Flächenbereich (24) von 200 mm x 80 mm, insbesondere von 160 mm x 60 mm, bei gedachter Verschiebung über die Plattform in Längsrichtung (14) der Riffeln stets mehrere Aussparungen (18, 20, 32) überfängt.

4. Plattform nach Anspruch 1, 2 oder 3, **dadurch gekennzeichnet, dass** die Aussparungen (18, 20, 32) so angeordnet sind, dass in Ebenenrichtung der Plattform und senkrecht zur Längsrichtung (14) der Riffeln (16, 22, 34) betrachtet keine Gerade denkbar ist, die nicht durch Aussparungen (18, 20, 32) verläuft oder diese tangiert.

5. Plattform nach einem oder mehreren der vorstehenden Ansprüche, **dadurch gekennzeichnet, dass** die Aussparungen in Ebenenrichtung der Plattform und senkrecht zur Längsrichtung der Riffeln betrachtet rechteckförmig oder trapezförmig ausgebildet sind.

6. Plattform nach einem oder mehreren der vorstehenden Ansprüche, **dadurch gekennzeichnet, dass** die Aussparungen (18, 20, 32) in Ebenenrichtung der Plattform und senkrecht zur Längsrichtung (14) der Riffeln (16, 22, 34) betrachtet eine Bogenform, insbesondere eine Kreissegmentform aufweisen.

7. Plattform nach einem oder mehreren der vorstehenden Ansprüche, **dadurch gekennzeichnet, dass** die Aussparungen (18, 20, 32) Ausfräsungen sind.

8. Plattform nach einem oder mehreren der vorstehenden Ansprüche, **dadurch gekennzeichnet, dass** der Abstand der Riffeln (16, 22, 34) voneinander quer zur Längsrichtung (14) der Riffeln betrachtet 8 mm - 20 mm, insbesondere 8 - 15 mm und weiter insbesondere 10 - 15 mm beträgt.

9. Plattform nach einem oder mehreren der vorstehenden Ansprüche, **dadurch gekennzeichnet, dass** der Abstand benachbarter Aussparungen (18, 20, 32) einer Riffel (16, 22, 34) voneinander in Längsrichtung (14) der Riffeln (16, 22, 34) 12 mm - 30 mm, insbesondere 12 - 25 mm und weiter insbesondere 12 - 20 mm beträgt.

10. Plattform nach einem oder mehreren der vorstehenden Ansprüche, **dadurch gekennzeichnet, dass** die Längserstreckung einer Aussparung (18, 20, 32) in Längsrichtung (14) der Riffeln (16, 22, 34) 10 - 25 mm, insbesondere 10 - 20 mm und weiter insbesondere 10 - 18 mm beträgt.

11. Hubladebühne mit einer Plattform nach einem oder mehreren der vorstehenden Ansprüche.

12. Hubladebühne nach Anspruch 11, **dadurch gekennzeichnet, dass** die Strangpressprofile (10, 30) in Längsrichtung des Kraftfahrzeugs angeordnet sind.

## Claims

1. A platform for tail lifts for motor vehicles, having a plurality of extruded aluminum profile sections (10, 30), wherein many riffles (16, 22, 34) extending in the extrusion direction of the extruded profile sections (10, 30) are provided on the walkable side (12) of the platform, which riffles are provided with recesses (18, 20, 32) open toward the walkable side (12), wherein the recesses (18, 20, 32) in a riffle (16, 22, 34) are not located over their entire length directly next to the recesses (18, 20, 32) of the adjacent riffles (16, 22, 34), **characterized in that** the recesses (18, 20, 32) of adjacent riffles (16, 22, 34) are offset from one another in the longitudinal direction (14) of the grooves (16, 22, 34) and, viewed in a top view onto the platform, are disposed in a zigzag-shaped or undulating pattern (36).

2. The platform according to claim 1, **characterized in that** the recesses (20) of the riffles (22) next to the directly adjacent riffles are located at essentially the same height in the longitudinal direction (14) of the grooves.

3. The platform according to claim 1 or 2, **characterized in that** the recesses (18, 20, 32) are disposed such that a surface area (24) of 200 mm x 80 mm, in particular of 160 mm x 60 mm, in an imaginary displacement across the platform in the longitudinal direction (14) of the riffles, always encompasses a plurality of recesses (18, 20, 32).

4. The platform according to claim 1, 2 or 3, **characterized in that** the recesses (18, 20, 32) are disposed such that, viewed in the direction of the plane of the platform and perpendicular to the longitudinal direction (14) of the grooves (16, 22, 34), no straight line is conceivable that does not extend through or is not tangent to recesses (18, 20, 32).

5. The platform according to one or more of the foregoing claims, **characterized in that** the recesses, viewed in the direction of the plane of the platform and perpendicular to the longitudinal direction of the grooves, are embodied as rectangular or trapezoidal.

6. The platform according to one or more of the foregoing claims, **characterized in that** the recesses (18, 20, 32), viewed in the direction of the plane of the platform and perpendicular to the longitudinal direction (14) of the grooves (16, 22, 34), have a curved shape, in particular a circular-segmental form.

7. The platform according to one or more of the foregoing claims, **characterized in that** the recesses (18, 20, 32) are milled cutouts.

8. The platform according to one or more of the foregoing claims, **characterized in that** the spacing of the riffles (16, 22, 34) from one another, viewed transversely to the longitudinal direction (14) of the grooves, is from 8 mm-20 mm, in particular from 8-15 mm, and more particularly from 10-15 mm.

9. The platform according to one or more of the foregoing claims, **characterized in that** the spacing of adjacent recesses (18, 20, 32) of one riffles (16, 22, 34) from one another in the longitudinal direction (14) of the riffles (16, 22, 34) is from 12 mm-30 mm, in particular 12-25 mm, and more particularly 12-20 mm.

10. The platform according to one or more of the foregoing claims, **characterized in that** the longitudinal length of one recess (18, 20, 32) in the longitudinal direction (14) of the riffles (16, 22, 34) is from 10-25 mm, in particular 10-20 mm, and more particularly 10-18 mm.

11. A tail lift having a platform according to one or more of the foregoing claims.

12. The tail lift as defined by claim 11, **characterized in that** the extruded profile sections (10, 30) are disposed in the longitudinal direction of the motor vehicle.

## Revendications

1. Plate-forme pour hayon élévateur de chargement pour véhicule automobile, comprenant une pluralité de profilés extrudés en aluminium (10, 30), dans laquelle sur le côté accessible (12) de la plate-forme sont réalisées une pluralité de nervures (16, 22, 34) qui s'étendent dans la direction de pressage des profilés extrudés (10, 30) et qui sont pourvues d'échancrures (18, 20, 32) ouvertes vers le côté accessible (12), dans laquelle les échancrures (18, 20, 32) dans une nervure (16, 22, 34) ne sont pas situées sur la totalité de leur extension respective directement à côté des échancrures (18, 20, 32) des nervures voisines (16, 22, 34), **caractérisée en ce que** les échancrures (18, 20, 32) de nervures voisines (16, 22, 34) sont agencées de façon décalée les unes des autres en direction longitudinale (14) des nervures (16, 22, 34) et, considérées dans une vue en plan sur la plate-forme, selon un motif (36) en forme de zigzags ou en forme d'ondulations.

2. Plate-forme selon la revendication 1, **caractérisée en ce que** les échancrures (20) de la seconde nervure respective (22) sont situées sensiblement à la même hauteur en direction longitudinale (14) des nervures.

3. Plate-forme selon la revendication 1 ou 2, **caractérisée en ce que** les échancrures (18, 20, 32) sont agencées de telle façon qu'une zone de surface (24) de 200 mm x 80 mm, en particulier de 160 mm x 60 mm, coiffe toujours plusieurs échancrures (18, 20, 32), lors d'un déplacement imaginaire sur la plate-forme en direction longitudinale (14) des nervures.

4. Plate-forme selon la revendication 1, 2 ou 3, **caractérisée en ce que** les échancrures (18, 20, 32) sont agencées de telle façon que, considérées dans la direction du plan de la plate-forme et perpendiculairement à la direction longitudinale (14) des nervures (16, 22, 34), il n'est pas possible d'imaginer une droite qui ne passe pas à travers des échancrures (18, 20, 32) ou qui ne soit pas tangente à celles-ci.

5. Plate-forme selon l'une ou plusieurs des revendications précédentes, **caractérisée en ce que** les échancrures, considérées dans la direction du plan de la plate-forme et perpendiculairement à la direction longitudinale des nervures, sont réalisées en forme de rectangle ou en forme de trapèze.

6. Plate-forme selon l'une ou plusieurs des revendications précédentes, **caractérisée en ce que** les échancrures (18, 20, 32), considérées dans la direction du plan de la plate-forme et perpendiculairement à la direction longitudinale (14) des nervures (16, 22, 34), présentent une forme cintrée, en particulier une forme en segment de cercle.

7. Plate-forme selon l'une ou plusieurs des revendications précédentes, **caractérisée en ce que** les échancrures (18, 20, 32) sont des fraisages.

8. Plate-forme selon l'une ou plusieurs des revendications précédentes, **caractérisée en ce que** la distance des nervures (16, 22, 34) les unes des autres, considérée transversalement à la direction longitudinale (14) des nervures, est de 8 mm à 20 mm, en particulier de 8 à 15 mm, et de façon plus particulière 10 à 15 mm.

9. Plate-forme selon l'une ou plusieurs des revendications précédentes, **caractérisée en ce que** la distance d'échancrures voisines (10, 20, 32) d'une nervure (16, 22, 34) les unes par rapport aux autres en direction longitudinale (14) des nervures (16, 22, 34) est de 12 mm à 30 mm, en particulier de 12 à 25 mm, et de façon plus particulière 12 à 20 mm.

10. Plate-forme selon l'une ou plusieurs des revendications précédentes, **caractérisé en ce que** l'extension longitudinale d'une échancrure (18, 20, 32) en direction longitudinale (14) des nervures (16, 22, 34) est de 10 à 25 mm, en particulier 10 à 20 mm, et de façon plus particulière 10 à 18 mm.

11. Hayon élévateur de chargement comprenant une plate-forme selon l'une ou plusieurs des revendications précédentes.

12. Hayon élévateur de chargement selon la revendication 11, **caractérisé en ce que** les profilés extrudés (10, 30) sont agencés en direction longitudinale du véhicule automobile.
